# EUROPEAN PATENT APPLICATION

(11) **EP 4 464 647 A1**
(43) Date of publication of application: **20.11.2024**
(21) Application number: 24175204.7
(22) Date of filing: 10.05.2024
(51) Int. Cl.: B66F 11/04

(54) **ARTICULATED DEVICE FOR ATTACHING A FILMING HEAD TO THE END OF A FILMING CRANE AND A FILMING CRANE INCORPORATING SUCH A DEVICE**

(30) Priority: 15.05.2023 ES 202330374
(71) Applicant: Vallés Navarro, Alfredo, 08940 Cornellà de Llobregat (Barcelona) (ES); Vallés Navarro, Andrés, 08940 Cornellà de LLobregat (Barcelona) (ES)
(72) Inventor: Vallés Navarro, Alfredo, 08940 Cornellà de Llobregat (Barcelona) (ES); Vallés Navarro, Andrés, 08940 Cornellà de LLobregat (Barcelona) (ES)
(74) Representative: Canela Giménez, Teresa

(57) **Abstract**

The present invention describes an articulated device linking the filming head and a filming crane, as well as the filming crane incorporating said device, a filming crane of the type which is telescopic and extends or retracts its sections, with the particularity that it has digitalised control of its balance positions which control the position of its mobile counterweight and in which said filming head can adopt positions ranging from one above to one below that corresponding to the horizontal position of the telescopic arm of the crane, the said device also having a second joint axis which allows the filming head to rotate in relation to each position, upper, lower or central, of the aforementioned crane arm, making it possible to easily obtain shots that were previously impossible or very difficult to obtain with this type of crane using the prior art.

## Description

### FIELD OF THE INVENTION

The present invention describes an articulated device linking the filming head and a filming crane, as well as the filming crane incorporating said device, a filming crane of the type which is telescopic and extends or retracts its sections, with the particularity that it has digitalised control of its balance positions which control the position of its mobile counterweight and in which said filming head can adopt positions ranging from one above to one below that corresponding to the horizontal position of the telescopic arm of the crane, the said device also having a second joint axis which allows the filming head to rotate in relation to each position, upper, lower or central, of the aforementioned crane arm, making it possible to easily obtain shots that were previously impossible or very difficult to obtain with this type of crane using the prior art.

### BACKGROUND

The world of the film industry is highly technological, always seeking to improve the quality and the possibilities of making shots or sequences that just a few years ago would have seemed technically impossible. On the other hand, due to the costs of mobilising many people together with the equipment necessary for the shots, the ease and time needed to make the precise adjustments to the machinery used are fundamental in relation to the cost of filming.

Film cranes are a type of device widely used in this industry, with many different types and technical qualities. For example, the same holder of the present application owns several registrations in this field of technology. For example, Spanish patent ES 2489391 T3. This is a telescopic filming crane in which, due to its size and the inertias involved in the displacement of the mass of the parts of the crane and the filming head, it presents a problem of adjustment and balancing when the telescopic stages are extended and when the crane boom is raised or lowered. The document develops a dynamic, automatic balancing of the counterweight together with precise adjustment with a second device controlled by computational and storage means that determine the optimal balancing positions of the crane in each of its working positions.

This type of crane, despite the automated balancing mechanisms that facilitate its adjustment, is still costly in terms of working time, preparation and optimal operation.

Despite the advantages of the crane described, it has limitations, present in what we could call the prior state of the art, of impossible shots. The heads that support the automatism of the film cameras are very heavy and robust. When they are assembled to the tip of the crane, they are adjusted so that their plane is flat with respect to the ground. This head remains fixed, relative to the ground plane during filming and the camera movements are carried out with the PAN, TILT and ROLL of the filming head activated by electronic means, either remotely via cable or without them.

The crane's job is to establish the base shot of the filming, adjusting and balancing itself for this purpose, with the movements of the filming shots being mainly the sole responsibility of the head, which incorporates sophisticated motors for the different possible movements, as well as adjustments for vibrations.

The crane arm can be adjusted to different positions in height or inclination relative to the ground. Depending on the type of crane, positions above the crane, which corresponds to the crane arm being parallel to the ground, and below the crane can be adopted. However, there are limitations to this arrangement. The most important limitation is that it is not possible with such a construction to take planes towards the sky, even when the crane is working "above the crane". The same applies when working "under the crane", the filming head cannot easily take shots towards the ground or at an angle that oscillates from the vertical axis of the ground. This is because in cranes, according to the state of the art, the tip of the crane cannot be rotated upwards to a position where the head is pointing skywards and perpendicular to the ground. Difficulties of balance and, in particular, the limitations of the crane rotation axis make this impossible.

It is known on the market that it is possible to dismantle the crane tip and connect it upside down, so that the filming head is now pointing upwards, inverted. This arrangement, in those models of crane, crane tip and film head that allow it, does make it possible to take a view of the sky. The disadvantage of this construction is that to adapt the crane to overhead shots, the camera head must be removed, the crane tip removed, the crane tip reassembled, the crane head reassembled and adjusted inverted to maintain the ground plane of the filming head, and finally the balance of the crane adjusted to ensure the stability of the filming. The camera head and the camera itself, with its mechanical and electronic means of control, are heavy devices that are not easy to handle and are very delicate and expensive. This represents, as can be seen from the above, a very slow and tedious process that would consume a lot of time and resources, increasing the cost of filming this type of shots.

The present invention aims to overcome the above disadvantages by providing a filming crane incorporating a crane and filming head linking device, replacing the known crane tips of the art, which is easy to mount and adjust in its different positions, especially with respect to the shots above and below the crane, thus making high angle and low angle shots possible.

Another of the objectives of the present invention is to incorporate in the crane automated mechanisms for adjusting the crane in its different working positions of its tip, reducing the time it takes to adapt the crane to its working availability.

These and other advantages of the present invention will become more evident throughout the accompanying description.

### BRIEF DESCRIPTION OF THE INVENTION

The present invention relates to a filming crane, of the type, which is telescopic and may be of a large size, incorporating at its end an articulated device which links it to a filming head. The crane has two-stage automatic balance adjustment mechanisms, one with a counterweight whose movement responds to the retraction or extension of the crane's telescopic segments and a second, precisely adjustable balance mechanism which, by computerised means, regulates the movement of another counterweight in accordance with pre-programmed settings on the crane.

The articulated device of the crane has two end fixing planes with two platforms and mechanisms for fixing to the crane and to the filming head, by bolts or other fastening elements. Between these platforms there are two joints, at least one of which is motorised and related to the film head, the other joint is related to the crane arm.

The articulated joint of the device in relation to the end of the crane is, in the preferred embodiment, manually pivoted, fixed in position by mechanical means, such as bolts or other fastening elements of the art. The invention provides, in another type of embodiment, for the incorporation of a motor controlling the rotation of the said joint, without this representing a substantial modification to the present invention.

The other articulated joint of said device is articulated with the filming head. This is of the type with automatic adjustment controlled by a motor which receives the rotation orders by electronic means of control. In the preferred embodiment, this is a harmonic motor, which, with a reduced weight and size of the mechanism, makes it possible to obtain significant reduction transformations and a high torque.

The camera, the filming head, the articulated device and its motor, as well as the extension and retraction mechanism of the crane all require cabling for their functions. For example, for the control and operating sensors, for the power supply, etc.

The telescopic crane of the invention has thus achieved the desired advantages. This construction allows for the taking of zenithal views and for this the adjustment is obtained with a significant reduction in time, as it is not even necessary to dismantle the articulated device at the tip of the crane in order to adjust the new zenithal filming position, it is sufficient to turn the motor of the device. Also, if desired, the manual turning adjustment of the articulated device in relation to the crane can be modified to reach the different positions of the crane, top, horizontal and bottom, by fixing it with the positioning of its fixing bolts at the appropriate angle.

This involves a significant reduction in working time and even an improvement in the precision of the crane's adjustment and balance for work on and under the crane. The computerised means of adjustment intervene at this point to ensure easy and optimal adjustment of the crane and the filming head in any of its possible positions.

### BRIEF DESCRIPTION OF THE DRAWINGS

For a better understanding of the invention, this description is accompanied by six sheets of drawings, provided for illustrative purposes only and not limiting the invention.

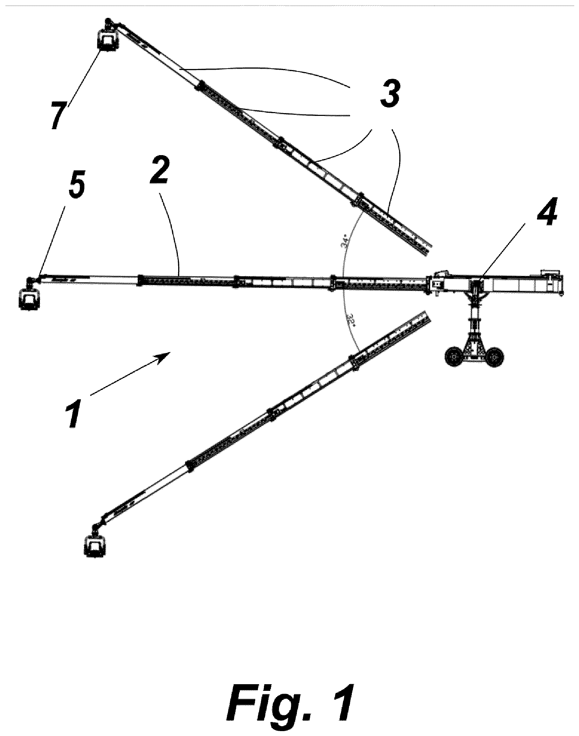

Figure 1 represents a crane according to the state of the art shown with a conventional tip in three filming positions, in order to illustrate the impossibility of shooting towards the sky while working "on the crane" with this type of crane. The TILT movement of the filming camera has limitations due to the structure of the camera head itself.
Figure 2 is a view similar to fig. 1, but now with a crane according to the present invention, showing three types of working positions of the crane, above, horizontal and below the crane, with low angle, front and high angle shots thanks to the second articulation of the device of the invention.
Figure 3 is a schematic assembly of the different main positions that can be used with the crane articulation device of the present invention. A normal or horizontal position, together with one above the crane and one below the crane. As in the previous figure, it shows, thanks to the rotation of the second joint of the device of the invention, low angle, horizontal and high angle shots that the invention makes possible with ease.

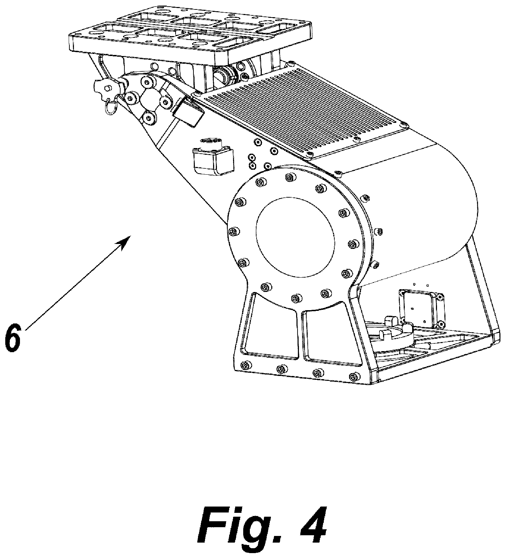

Figure 4 is a perspective representation of an example of an embodiment of the articulation device included in the present invention.

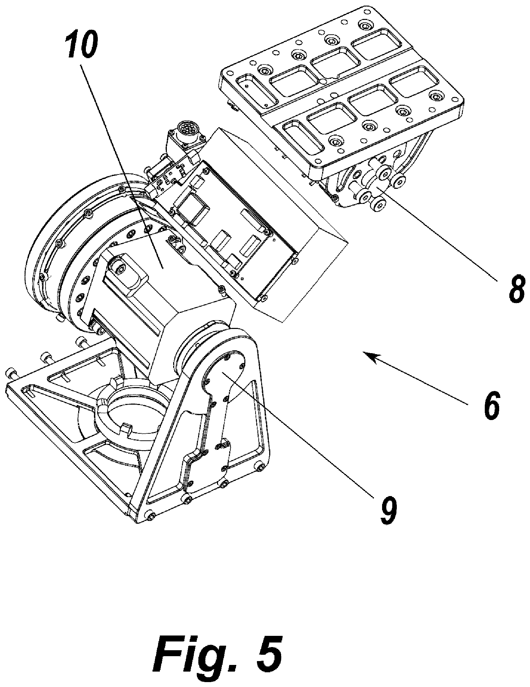

Figure 5 is another representation of the device of the previous figure, now shown with its parts separated, thus allowing the parts of the device to be shown.

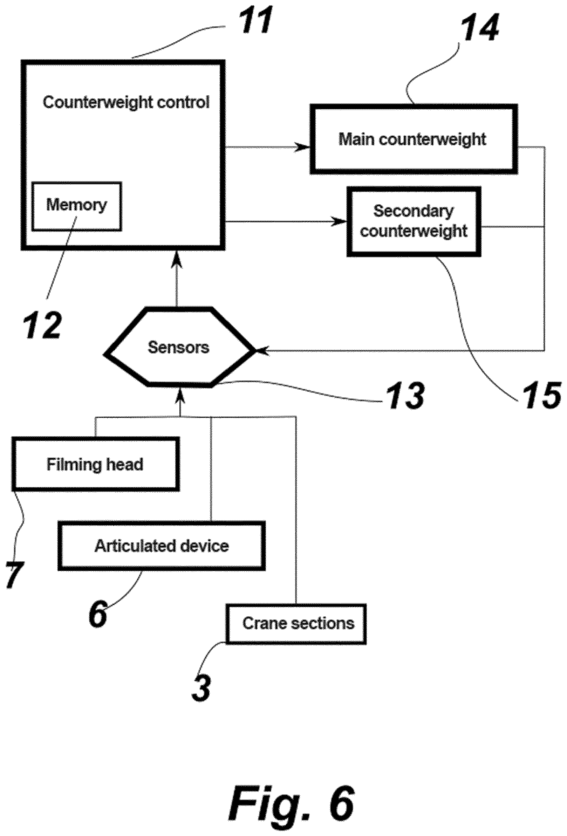

Figure 6 is a block view showing the operation of the crane balancing mechanism according to the present invention.

### DETAILED DESCRIPTION OF INVENTION

The present invention consists of a telescopic filming crane (1), with a shaft (2) with sections (3) that can be extended or retracted, counterweight means to balance the crane around a point (4), "fulcrum", for balancing of said shaft (2) of the crane (1), presenting at its extreme tip (5) an articulated device (6), for linking with a filming head (7).

Said device (6) is made up of a double joint, one with a first rotation axis (8), linked to the union with the extreme tip (5) of said telescopic crane (1), the other, a second rotation axis (9), linked to the union with said filming head (7).

On the one hand, the first articulation that allows rotation around the first rotation axis (8), of the connection plane with the end point (5) of the telescopic crane is, in the preferred embodiment of the invention, a connection that is fixed manually, for example, by means of bolts. This articulation allows the filming head (7) to be easily adjusted to work in an "over the crane" or "under the crane" position, when you place the axis (2) of the crane (1) above or below its horizontal position.

On the other hand, the second articulation responsible for the rotation around the second rotation axis (9), of the plane of union with the filming head (7), is motorized, so that the angle of said plane can be controlled and directed by means of the rotation commands applied to the motor of said articulation. The joint of the articulated device with the filming head (7) is, for example, by means of bolts, screws and threads or any means of union that is easy to assemble and disassemble and offers adequate security and stability. This rotation of the second rotation axis (9) allows the filming head to be positioned looking skywards, horizontally or groundwards, in order to take low angle, horizontal or high angle shots, as desired.

In the preferred embodiment of the invention, the motorization of the second rotation axis (9) consists of a motor (9) of the harmonic type. This type of engine allows with a reduced weight and size of the same, to deliver a high torque and a high reduction ratio.

Just like the extension and retraction of the telescopic sections of the filming crane (1) require, according to the known art, the stabilisation of the crane (1), the movements of the filming head (7) that make it possible to use the articulated device (6), for example, for shots skywards, require in turn the stabilisation of the crane (1) and the control or compensation of the vibrations that the described movements can occasionally produce in the filming head (6). Logically, modern filming heads include their own means of stabilisation, both mechanical and electronic. In the present invention, the means of stabilisation of the crane (1) make it possible to adapt the balance of the crane to the new positions that can be obtained with the present invention.

The means of stabilisation of the crane (1) of the present invention are electronic and mechanical. On the one hand, there is a main counterweight (14) that moves in automatic response to the extension of the arms or sections (3) of the crane (1). Additionally, due to the uneven distribution of the crane's masses, to which is added the weight of the articulated device (6) and the filming head (7), there is a second "fine" crane balancing device that includes a second counterweight (15) that moves electronically in response to previous calibrations stored in the memory (12) of a computerised control unit (11) for electronic adjustment of the crane's counterweight.

By means of sensors (13), the computerised control unit (11) receives at all times the position of the arms or sections (3) of the crane, the inclination of the crane and the position of the articulated device (6) and the filming head (7), as well as the position of the main (14) and secondary (15) counterweights, acting accordingly, in accordance with the storage in memory (12) of the balance points of previous calibrations, moving the secondary counterweight (14), of precise adjustment, to the previously stipulated balance point, thereby automatically balancing the filming crane (1).

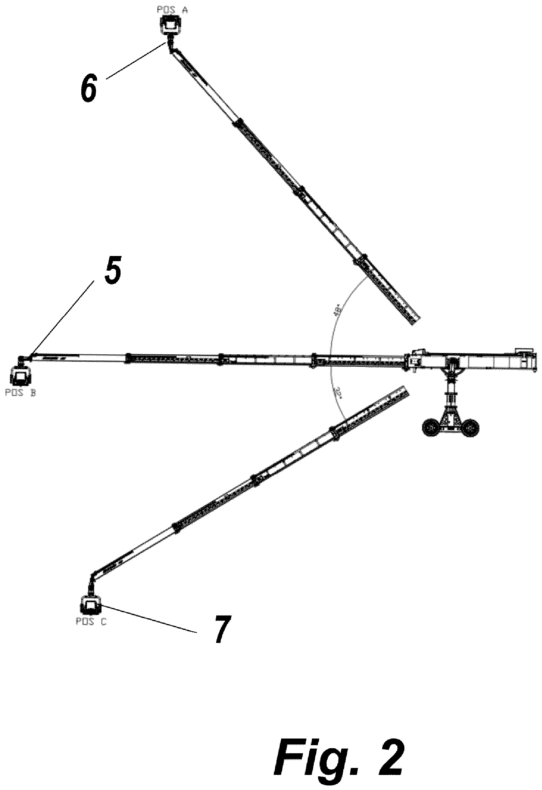

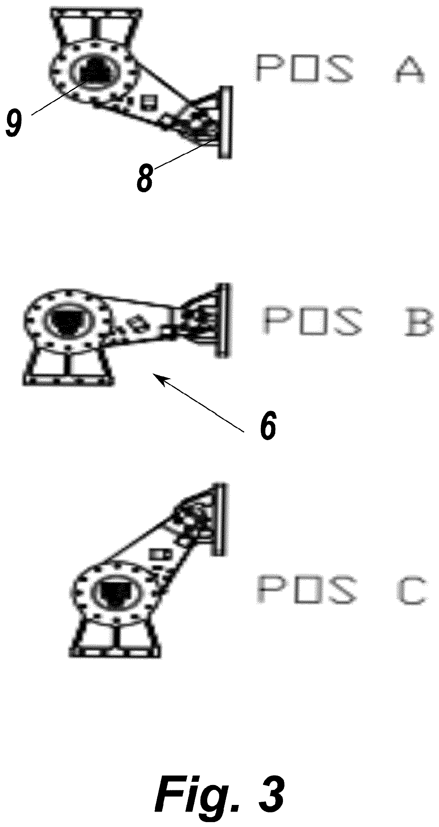

In this way, the intended objectives have been achieved. On the one hand, it is now possible to take shots skywards or low angle shots, when the crane is adjusted to work "on the crane", which could not be achieved with the prior art because there was a limit to the capacity of the crane end to rotate upwards or downwards, both because of the physical limitations of the crane arms with respect to the ground and because of the possible positions of the counterweight in order to balance the crane. Normally, it could be achieved 34° upwards from the end tip (5) and approximately 32°. Now, as Figs. 2 and 3 show, even with the previously described limitations to the rotation of the crane arms, the plane of the filming head (8) can be placed in any of the positions: skyward, "A", horizontal, "B", or groundward or swooping, "C", as shown in Fig. 3.

It is understood that in the present case any details of finish and shape may be variable provided that they do not alter in essence what is described by the present invention, as set out in this description and specifically claimed in the following claims.

### REFERENCES

- Telescopic filming crane
- Crane shaft (outriggers)
- Crane boom sections
- Crane "Fulcrum" of the crane
- Crane end tip
- Articulated device
- Filming head
- First rotation axis
- Second rotation axis
- Motor
- Computer control unit
- Storage memory
- Sensors
- Main counterweight
- Secondary counterweigh

## Claims

1. -ARTICULATED DEVICE FOR ATTACHING A FILMING HEAD TO THE END OF A FILMING CRANE, of the type of telescopic filming cranes (1) having a shaft (2) with sections (3) which can be extended or retracted, counterweight means for balancing the crane around a fulcrum point (4) for balancing of said shaft (2), **CHARACTERISED in that** said articulated device (6), of linkage with said filming head (7):
- is composed of two rotation axis (8, 9), a first rotation axis (8) linked to the surface of connection with the end tip (5) of said telescopic crane (1), the other, a second rotation axis (9) linked to the surface of connection with said filming head (7);
- has a motor (10), associated with said second rotation axis (9), responsible for the rotation of the plane of union of said articulated device (6) with said filming head (7), thus allowing a rotation of at least 90° in the upper direction and 90° in the lower direction.

2. - DEVICE, according to claim 1, **CHARACTERISED in that** said second rotation axis (9), allows the filming head to be positioned skywards, horizontally or groundwards, in order to take shots high angle, horizontal or low angle shots, as desired.

3. - DEVICE, according to claim 1, **CHARACTERISED in that** said first rotation axis (8) allows at least three defined positions of the filming head (7): upper or "over the crane", horizontal and lower or "under the crane", according to whether said axis (2) of the crane (1) is in a position raised from the horizontal, in a horizontal position or in a position below the horizontal.

4. - DEVICE, according to claim 1, **CHARACTERISED in that** said first rotation axis (8) is manually fixed.

5. - DEVICE, according to claim 4, **CHARACTERISED, In that** said first rotation axis (8) is fixed by bolts.

6. - DEVICE, according to claim 1, **CHARACTERISED in that** said motor (10) is a harmonic type motor.

7. - FILMING CRANE, of the telescopic crane type (1) having a shaft (2) with sections (3) which can be extended or retracted, means of counterweight for balancing the crane around a fulcrum point (4) for balancing of said shaft (2), **CHARACTERISED in that** it has an articulated device (6), for connection with a filming head (7); said articulated device (6):
- is composed of two rotation axis (8, 9), a first rotation axis (8) linked to the surface of connection with the end tip (5) of said telescopic crane (1), the other, a second rotation axis (9) linked to the surface of connection with said filming head (7):
- has a motor (10), associated with said second rotation axis (9), responsible for the rotation of the plane of union of said articulated device (6) with said filming head (7), thus allowing a rotation of at least 90° in the upper direction and 90° in the lower direction.

8. - FILMING CRANE, according to the previous claim, **CHARACTERISED in that** it has a main counterweight (14) that moves in automatic response to the extension of the arms or sections (3) of the crane (1), as well as a secondary counterweight (15), of precise balance of the crane, which moves electronically controlled by a computerised crane balance control unit (11).

9. - FILMING CRANE, according to the previous claim, **CHARACTERISED in that** said computerised control unit (11) of the balance of said crane (1), has a memory (12) which, at least, contains the previous stored calibrations of the balance positions of the counterweights (14, 15) at each position of the sections (3) and inclination of the crane axis, of the position of said filming head (7) and of said articulated device (6).

10. - FILMING CRANE, according to the previous claim, **CHARACTERISED by** sensors (13) that receive at all times the position of the arms or sections (3) of said crane (1), its inclination, the position of said articulated device (6), of said filming head (7), as well as the position of the main counterweights (14) and the secondary counterweights (15).
